(19) Europäisches Patentamt
European Patent Office
Office européen des brevets

(11) Veröffentlichungsnummer : **0 146 023**
**B1**

(12) # EUROPÄISCHE PATENTSCHRIFT

(45) Veröffentlichungstag der Patentschrift : **27.05.87**

(51) Int. Cl.[4] : **C 08 L 69/00**, C 08 L 25/04, C 08 L 51/00 // (C08L69/00, 25:04, 51:00),(C08L25/04, 69:00, 51:00),(C08L51/00, 69:00, 25:04)

(21) Anmeldenummer : **84114314.2**

(22) Anmeldetag : **27.11.84**

(54) **Verwendung von halogenfreien Polycarbonaten auf Basis von Bis-(3,5-dimethyl-4-hydroxyphenyl)-methan in Kombination mit Polymerisaten als Flammschutzmittel.**

(30) Priorität : **07.12.83 DE 3344101**

(43) Veröffentlichungstag der Anmeldung : **26.06.85 Patentblatt 85/26**

(45) Bekanntmachung des Hinweises auf die Patenterteilung : **27.05.87 Patentblatt 87/22**

(84) Benannte Vertragsstaaten : **DE FR GB IT NL**

(56) Entgegenhaltungen :
**EP-A- 0 046 558**
**EP-A- 0 064 692**
**GB-A- 2 118 194**
**US-A- 4 172 103**

(73) Patentinhaber : **BAYER AG**
**Konzernverwaltung RP Patentabteilung**
**D-5090 Leverkusen 1 Bayerwerk (DE)**

(72) Erfinder : **Serini, Volker, Dr.**
**Scheiblerstrasse 81**
**D-4150 Krefeld (DE)**
Erfinder : **Lindner, Christian, Dr.**
**Riehlerstrasse 200**
**D-5000 Köln 60 (DE)**
Erfinder : **Müller, Friedemann, Dr.**
**Am Steinacker 5**
**D-4040 Neuss 21 (DE)**
Erfinder : **Nising, Wolfgang, Dr.**
**Mainstrasse 4**
**D-5205 St. Augustin 2 (DE)**
Erfinder : **Peters, Horst, Dr.**
**Winterberg 25**
**D-5090 Leverkusen 3 (DE)**
Erfinder : **Kauth, Hermann, Dr.**
**Kolpingstrasse 34**
**D-4150 Krefeld (DE)**

**EP 0 146 023 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Halogenfreie Polycarbonate aus Bis-(3,5-dimethyl-4-hydroxyphenyl)-methan und gegebenenfalls anderen Diphenolen sind bekannt (siehe DE-OS 20 63 050, DE-OS 22 11 957 und V. Serini, D. Freitag und H. Vernaleken, Ang. Makrom. Chemie 55 (1976), 175 bis 189). Sie wurden bislang nicht als flammwidrig erkannt (siehe DE-OS 22 48 817, insbesondere Beispiel 4, Seite 11).

Mischungen aus Polycarbonaten auf Basis tetraalkylierter Bisphenole mit anderen Polymerisaten sind ebenfalls bekannt (siehe beispielsweise DE-OS 23 29 585, DE-OS 23 29 646, DE-OS 31 18 697 und DE-OS 31 18 861). Doch auch aus diesen Abmischungen ist die flammhemmende Wirkung von Polycarbonaten auf Basis Bis-(3,5-dimethyl-4-hydroxyphenyl)-methan nicht bekannt.

Überraschenderweise wurde nun gefunden, daß thermoplastische halogenfreie Polycarbonate auf Basis von Bis-(3,5-dimethyl-4-hydroxyphenyl)-methan in Abmischungen mit halogenfreien Styrolpolymeren und/oder halogenfreien Pfropfpolymeren von ungesättigten Monomeren auf Kautschuke flammwidrige Eigenschaften besitzen, im Gegensatz etwa zu solchen Abmischungen, die als halogenfreie Polycarbonatkomponenten solche auf Basis von 2,2-Bis-(3,5-dimethyl-4-hydroxyphenyl)-propan enthalten.

Die Flammwidrigkeit wird im vorliegenden Zusammenhang in bekannter Weise nach UL-Subjekt 94 oder nach dem $O_2$-Index gemäß ASTM-D 2863 — A gemessen.

Die erfindungsgemäßen Abmischungen sind daher geeignet, als Flammschutz für Gegenstände aus Kunststoff zu dienen, ohne daß die Mitverwendung der bislang bekannten Flammschutzmittel wie Halogenverbindungen, Metallverbindungen, Phosphor-haltigen Substanzen oder Schwefel-haltigen Substanzen erforderlich wäre.

Die erfindungsgemäß als Flammschutzmittelkomponenten wirksamen thermoplastischen Polycarbonate auf Basis von Bis-(3,5-dimethyl-4-hydroxyphenyl)-methan haben mittlere Molekulargewichte $\bar{M}w$ (Gewichtsmittel, bestimmt nach der Lichtstreumethode) von 10 000 bis 200 000, vorzugsweise von 20 000 bis 80 000 und insbesondere von 25 000 bis 60 000.

Die Wirksamkeit der Flammschutzmittelkomponente hängt einmal vom Gewichtsanteil der Polycarbonatkomponente in der Gesamtmischung, zum anderen von der Menge an Carbonatstruktureinheiten der Formel (I) im Polycarbonatmolekül ab

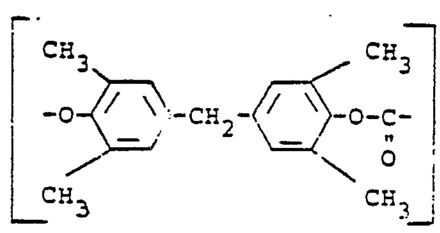

(I)

wobei bei 100 Mol-% an (I) die beste Wirksamkeit und bei 1 Mol-% die Wirksamkeit praktisch nicht mehr vorhanden ist.

In den erfindungsgemäß zu verwendenden Abmischungen mit Gewichtsanteilen bis hinunter zu 40 Gew.-%, bezogen auf 100 Gew.-% Gesamtmischung, beträgt daher der Anteil an Carbonatstruktureinheit (I) im Polycarbonatmolekül mindestens 25 Mol-%, bezogen auf die Gesamtmenge an Carbonatstruktureinheiten in der Polycarbonatkomponente.

Die Wirksamkeit des Polycarbonatflammschutzmittels hängt auch in gewissem Maß von der Art des cokondensierten Diphenols im Polycarbonat, also beispielsweise von der Art der Struktureinheiten (II)

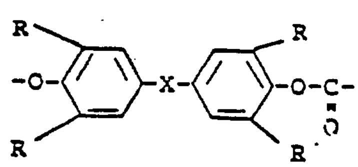

(II), ab.

Dann, wenn R = Alkyl, insbesondere $CH_3$, und X = $C_2$-$C_6$-Alkylen, $C_2$-$C_6$-Alkyliden, Cyclohexylen oder Cyclohexyliden, eine Einfachbindung oder ein Rest der Formel

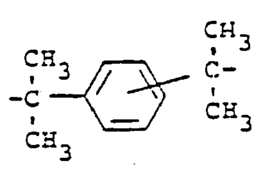

bedeuten, sind diese wirksamer als dann, wenn R = Wasserstoff und X die genannten Reste bedeutet.

Eine geeignete, andere Struktureinheit für die Kombination mit den Struktureinheiten (I) ist auch die der folgenden Formel (IIa)

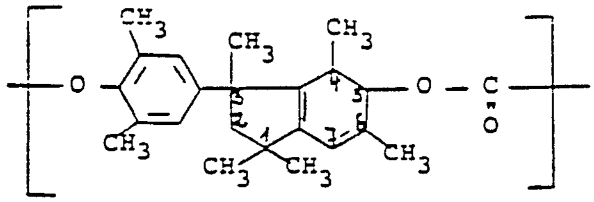

(IIa)

Somit sind erfindungsgemäß zu verwendende Polycarbonate auf Basis von Bis-(3,5-dimethyl-4-hydroxyphenyl)-methan solche, die mindestens 25 Mol-% an Struktureinheiten der Formel (I), vorzugsweise mindestens 40 Mol-% und insbesondere mindestens 70 Mol-% an Struktureinheiten der Formel (I) enthalten. Die höchste Flammwidrigkeit besitzen die Homopolycarbonate aus Bis-(3,5-dimethyl-4-hydroxyphenyl)-methan. Die komplementären Mengen an anderen Carbonatstruktureinheiten entsprechen somit maximal 75 Mol-%, vorzugsweise maximal 60 Mol-%, insbesondere maximal 30 Mol-% und im meist bevorzugten Fall 0 Mol-%, und werden durch die Strukturformel (III)

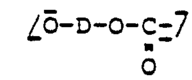

(III)

dargestellt, worin —O—D—O— ein halogenfreier, schwefelfreier und phosphorfreier Diphenolat-Rest mit Ausnahme gemäß Struktur (I) ist, der vorzugsweise nur aus C-, H- und O-Atomen aufgebaut ist, und vorzugsweise 6 bis 30 C-Atome hat.

Bevorzugt vorliegende, andere Carbonatstruktureinheiten sind die der Formeln (II) und (IIa).

Anstelle von Copolycarbonaten mit Struktureinheiten der Formeln (I) und (III) sind auch Mischungen der entsprechenden Homopolycarbonate verwendbar.

Die erfindungsgemäß verwendbaren Polycarbonate können in bekannter Weise durch den Einbau von halogenfreien, schwefelfreien und phosphorfreien Verzweigern verzweigt sein.

Halogenfreie Polycarbonate im Sinne der vorliegenden Erfindung bedeuten, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm Mengen an verseifbarem Chlor, resultierend beispielsweise aus der Herstellung der Polycarbonate mit Phosgen nach dem Phasengrenzflächenverfahren nicht als halogenhaltig im Sinne vorliegender Erfindung anzusehen ist. Derartige Polycarbonate mit ppm-Gehalten an verseifbarem Chlor sind halogenfreie Polycarbonate im Sinne vorliegender Erfindung. Entsprechendes gilt für schwefelfreie beziehungsweise phosphorfreie Polycarbonate; S- oder P-haltige Verunreinigungen resultierend beispielsweise aus der Aufarbeitung des Polycarbonats würden nicht mitzählen.

Die Herstellung der als Flammschutzmittel erfindungsgemäß verwendbaren Polycarbonate ist bekannt und beispielsweise in den eingangs erwähnten deutschen Offenlegungsschriften beschrieben.

Geeignete andere erfindungsgemäß cokondensierbare Diphenole HO—D—OH (IV) als Bis-(4-hydroxy-3,5-dimethylphenyl)-methan sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-ether, Bis-(hydroxyphenyl)-ketone und α,α'-Bis-(hydroxyphenyl)-diisopropylbenzole sowie deren kernalkylierte Abkömmlinge. Diese und weitere geeignete Diphenole sind beispielsweise in der Monographie Hermann Schell, Chemistry and Physics of Polycarbonates, New York, Interscience Publishers, 1964, Polymer Reviews, Vol. 9, der Veröffentlichung V. Serini, D. Freitag, H. Vernaleken, Polycarbonate aus o,o,o',o'-tetramethylsubstituierten Bisphenolen, Angew. Makrom. Chem. 55 (1976), 175-189 und den DE-OSS-20 63-050, 22 11 957, 26 15 038 und 22 48 817 beschrieben.

Bevorzugte cokondensierbare Diphenole sind 2,2-Bis-(4-hydroxyphenyl)-propan, Bis-(4-hydroxyphenyl), 1,1-Bis-(4-hydroxyphenyl)-cyclohexan, α,α'-Bis-(4-hydroxyphenyl)-p-diisopropylbenzol, 2,2-Bis-(3-methyl-4-hydroxyphenyl)-propan und 1.1.3.4.6-Pentamethyl-3-(3,5-dimethyl-4-hydroxyphenyl)-indan-5-ol.

Unter halogenfreien Styrolpolymeren werden erfindungsgemäß Homo- und Copolymere verstanden, die mindestens 50 Gew.-% mindestens eines Monomeren aus der Gruppe des Styrols und seiner halogenfreien Derivate einpolymerisert enthalten. Zu dieser Gruppe gehören z. B. Styrol, α'-Methylstyrol, p-Methylstyrol, 3,4-Dimethylstyrol, o- und p-Divinylbenzol und p-Methyl-α-methylstyrol, Bevorzugt sind Styrol, α-Methyl- und p-Methylstyrol, besonders bevorzugt sind Styrol und p-Methylstyrol, ganz besonders bevorzugt ist Styrol selbst.

Die Styrolpolymeren dieser Erfindung können neben Styrol und seinen Derivaten bis zu 50 Gew.-% mindestens eines halogenfreien Monomeren aus der Gruppe der Acryl- und Methacrylverbindungen und der Gruppe der ungesättigten Dicarboxylanhydride einpolymerisiert enthalten. Zu der ersten Gruppe gehören z. B. Acryl- und Methacrylsäure, Acrylnitril, Methacrylnitril, Methylacrylat, Ethylacrylat, n- und iso-Propylacrylat, n- und iso-Butylacrylat, 2-Ethylhexylacrylat, Methylmethacrylat, Ethylmethacrylat, n-

und iso-Propylmethacrylat, n- und iso-Butylmethacrylat, Cyclohexylmethacrylat und Isobornylmethacrylat. Aus dieser Gruppe werden Acrylnitril und Methylmethacrylat bevorzugt. Das bevorzugte Monomere der zweiten Gruppe ist das Maleinsäureanhydrid.

Bevorzugte halogenfreie Styrolpolymere sind insbesondere Polystyrol, Styrol-Acrylnitril-Copolymere aus 1,5 bis 15 Gew.-% Acrylnitrilgehalt, Styrol-Methylmethacrylat-Copolymere, Styrol-Maleinsäureanhydrid-Copolymere mit bis zu 20 Gew.-% Maleinsäureanhydrid und Styrol-Acrylnitril-Maleinsäureanhydrid-Copolymere mit 1,5 bis 15 Gew.-% Acrylnitril und bis zu 20 Gew.-% Maleinsäureanhydrid. Bevorzugt werden von diesen Polystyrol und die genannten Styrol-Acrylnitril-Copolymeren, ganz besonders bevorzugt die letzteren. Die erfindungsgemäß zu verwendenden Styrolpolymeren haben mittlere Gewichtsmittelmolekulargewichte $\bar{M}w$ (gemessen in DMF bei c = 5 g/l und 20 °C) zwischen 10 000 und 600 000 und können durch Suspensionspolymerisation in Gegenwart von Katalysatoren in bekannter Weise hergestellt werden.

(Literatur dazu : Beilsteins Handbuch der organischen Chemie, 4. Auflage, 3. Ergänzungswerk, Band 5, 1163 bis 1169, Springer-Verlag, 1964 ; H. Ohlinger, Polystyrol, 1. Teil, Herstellungsverfahren und Eingenschaften der Produkte, Springer Verlag 1955).

In die halogenfreien Pfropfpolymeren werden gemäß dieser Erfindung als halogenfreie Propfmonomere die obengenannten eingesetzt die für die Herstellung der erfindungsgemäß zu verwendenden Styrolpolymeren (b) aufgeführt sind.

Als Pfropfgrundlage für die Herstellung der erfindungsgemäß zu verwendenden halogenfreien Pfropfpolymeren werden Butadienkautschuke mit bis zu 50 Gew.-% an einpolymerisierten halogenfreien Comonomeren, vorzugsweise Styrol oder Acrylnitril, insbesondere Polybutadien, halogenfreie Acrylcopolyester-Kautschuke und halogenfreie Polyolefinkautschuke wie Ethylen-Propylen-Dien-Terpolymerisate eingesetzt. Besonders bevorzugte halogenfreie Kautschuke sind Polybutadien und halogenfreie Acrylcopolyesterkautschuke. Derartige Kautschuke sind beispielsweise in den DE-OSS 23 29 585 und 31 18 861 beschrieben. Die erfindungsgemäß zu verwendenden halogenfreien Pfropfpolymeren haben ein Kautschuk : Pfropfmonomeren-Gewichtsverhältnis von 93 % : 7 % bis 5 % : 95 %, vorzugsweise von 90 % : 10 % bis 70 % : 30 % und von 50 % : 50 % bis 10 % : 90 %. Derartige Pfropfpolymerisate können nach bekannten Verfahren erhalten werden, beispielsweise nach dem Verfahren der Emulsionpolymerisation oder Suspensionspolymerisation, wie dies beispielsweise in den beiden vorstehend angezogenen DE-OSS dargelegt ist.

Erfindungsgemäß bevorzugt zu verwendende Pfropfpolymere sind die, die aus den oben genannten halogenfreie Kautschuken und aufgepfropftem Styrol, Methylmethacrylat, Styrol-Acrylnitril-Gemisch, Styrol-Methylmethacrylat-Gemisch oder Styrol-Maleinsäureanhydrid-Gemisch bestehen. Besonders bevorzugt werden Pfropfpolymere, die aus oben genanntem Kautschuk und aufgepfropftem Styrol-Acrylnitril-Gemisch mit einem Acrylnitril-Gehalt von 1,5 bis 15 Gew.-%, bezogen auf aufgepfropftes Styrol-Acrylnitril-Gemisch, bestehen.

Das Pfropfpolymere wird bevorzugt durch radikalische Polymerisation des oder der Pfropfmonomeren in Anwesenheit des Kautschuks, der die Pfropfgrundlage darstellt, erhalten. Die Pfropfpolymerisation mehr als eines Monomers auf den Kautschuk ist so durchzuführen, daß die Harzkomponente der Pfropfpolymerisate nach der Polymerisation das erfindungsgemäße Monomerenverhältnis aufweist. Unter « Pfropfauflage » wird der gesamte polymerisierte Teil der für die Pfropfpolymerisation eingesetzten Monomeren verstanden, unabhängig davon, ob die Monomeren mit dem Kautschuk dabei chemisch verknüpft worden sind. Die erfindungsgemäß einzusetzende Pfropfpolymer-Komponente (c) kann also auch aus einem innigen Gemisch aus gepfropftem Polymer und Homo- oder Copolymer bestehen.

Unter Styrolpolymeren und Pfropfpolymeren im Sinne dieser Erfindung werden auch Mischungen von Styrolpolymeren und Mischungen von Pfropfpolymeren verstanden.

Der Anteil der Komponenten in den erfindungsgemäß zu verwendenden Abmischungen beträgt zwischen 40 und 95 Gew.-% an Polycarbonat-Komponente (a), zwischen 0 und 60 Gew.-% an Styrolpolymer-Komponente (b) und zwischen 0 und 60 Gew.-% Pfropfpolymer-Komponente (c), bezogen jeweils auf 100 Gew.-% an Abmischung aus (a) + (b) + (c). Bevorzugte Mengenverhältnisse sind 60 bis 95 Gew.-% (a), 0 bis 40 Gew.-% (b) und 0 bis 40 Gew.-% (c) und besonders bevorzugte Mengenverhältnisse sind 75 bis 95 Gew.-% (a), 0 bis 25 Gew.-% (b) und 0 bis 25 Gew.-% (c), wobei wiederum jeweils auf 100 Gew.-% an Abmischung aus (a) + (b) + (c) Bezug genommen ist.

Gegenstand der vorliegenden Erfindung ist somit die Verwendung von Abmischungen enthaltend

(a) 40 bis 95 Gew.-%, vorzugsweise 60 bis 95 Gew.-% und insbesondere 75 bis 95 Gew.-% an halogenfreien, schwefelfreien und phosphorfreien thermoplastichen Polycarbonaten mit $\bar{M}w$ von 10 000 bis 200 000

(b) 0 bis 60 Gew.-%, vorzugsweise 0 bis 40 Gew.-% und insbesondere 0 bis 25 Gew.-% an halogenfreien Styrolpolymeren, die mindestens 50 Gew.-% Styrol oder halogenfreie Styrolderivate und bis zu 50 Gew.-% halogenfreie Acryl- oder Methacrylverbindungen oder eines ungesättigten Dicarboxylanhydrides einpolymerisiert enthalten, mit mittleren Gewichtsmittelmolekulargewichten $\bar{M}w$ zwischen 10 000 und 600 000 und

(c) 0 bis 60 Gew.-%, vorzugsweise 0 bis 40 Gew.-% und insbesondere 0 bis 25 Gew.-% an halogenfreien Pfropfpolymeren der unter (b) aufgeführten halogenfreien Monomeren auf halogenfreie

Butadien-, Acrylcopolyester- oder Polyolefinkautschuke, welche nach bekannten Verfahren erhalten werden und denen ein Kautschuk : Pfropfmonomeren-Gewichtsverhältnis von 93 % : 7 % bis 5 % : 95 %, vorzugsweise von 90 % : 10 % bis 70 % : 30 % und von 50 % : 50 % bis 10 % : 90 % zugrunde liegt,

wobei die Summe der Komponenten (a) + (b) + (c) in den Abmischungen jeweils 100 Gew.- % beträgt, als Flammschutzmittel zur Herstellung von flammwidrig auszurüstenden Gegenständen aus thermoplastischen Kunststoffen, dadurch gekennzeichnet, daß die halogenfreien, schwefelfreien und phosphorfreien Polycarbonate 25 Mol- % bis 100 Mol- %, vorzugsweise 40 Mol- % bis 100 Mol- %, insbesondere 70 Mol- % bis 100 Mol- % und ganz besonders 100 Mol- % an bifunktionellen Struktureinheiten der Formel (I) und 75 Mol- % bis 0 Mol- %, vorzugsweise 60 Mol- % bis 0 Mol- %, insbesondere 30 Mol- % bis 0 Mol- % und ganz besonders 0 Mol- % an bifunktionellen Struktureinheiten der Formel (III), vorzugsweise an Struktureinheiten der Formel (II) und/oder (IIa) enthalten.

Die Herstellung der erfindungsgemäß verwendbaren Abmischungen kann beispielsweise über die Lösungen der Komponenten (a), (b) und (c) oder über deren Schmelzen erfolgen (Siehe beispielsweise DE-OS 2 329 585).

Für die flammwidrige Wirkung der erfindungsgemäß verwendbaren Abmischungen ist nicht nur der Aufbau der Polycarbonat-Komponente (a) sondern kann auch der Aufbau der Styrolpolymeren (b) und der Pfropfpolymeren (c) von Einfluß sein. Insbesondere wurde gefunden, daß Styrol-Acrylnitril-Copolymere (b) und Pfropfpolymere (c), die ein Styrol-Acrylnitril-Monomerengemisch aufgepfropft enthalten, einen zusätzlichen günstigen Einfluß haben, wenn das Gewichtsverhältnis von Styrol : Acrylnitril zwischen 98,5 : 1,5 Gew.- % und 85 : 15 Gew.- % liegt.

Die erfindungsgemäß als Flammschutzmittel verwendbaren Abmischungen enthaltend die Komponenten (a) + (b) + (c) können noch Füllstoffe, wie Mineralien oder Ruß, Verstärkungsstoffe, wie Glasfasern oder Kohlefasern, Stabilisatoren, Entformungsmittel, Farbstoffe oder Pigmente oder andere übliche Zusatzstoffe enthalten.

Die erfindungsgemäß als Flammschutzmittel verwendbaren Abmischungen enthaltend die Komponenten (a) + (b) + (c) sind überall dort einsetzbar, wo der Einsatz von flammwidrigen thermoplastischen Kunststoffen, insbesondere von flammwidrigen Polycarbonat/ABS-Mischungen gefordert ist, also beispielsweise im Gerätesektor, im Elektro- und Elektronikbereich, im Installations- und Heizungsbereich sowie auf dem Verkehrssektor.

Beispiele für den Einsatz der flammwidrigen Abmischungen sind Kaffeemaschinen, Elektroherde, Grillgeräte, Bügeleisen, Waschmaschinen, Filmgeräte, Diaprojektoren, Verkabelungen, Telefonanlagen, Fernschreibanlagen, Kabelfernsehanlagen, Elektromotoren, Klimaanlagen, Rechenanlagen, Beleuchtungsanlagen, elektrische Installationen im Wohn- und Industriebereich, Radiogeräte, Fernsehgeräte, Plattenspieler, Videorecorder, Automobile und Flugzeuge.

Einige spezielle Beispiele für die erfindungsgemäße Verwendung der flammwidrigen Abmischungen sind Aschenbecher in Automobilen, Speisetabletts in Flugzeugen, Instrumententräger in Automobilen, Lampenhalterungen, Träger elektrischer und elektronischer Bauteile, Träger elektrischer und elektronischer Bauteile in verschiedensten Geräten sowie Abdeckungen für Sicherungselemente und Stromschalter in elektrischen Anlagen.

## Beispiele 1-8

Flammwidrigkeit von Abmischungen aus Polymerisaten und Bis-(3,5-dimethyl-4-hydroxyphenyl)-methan einkondensiert enthaltenden Polycarbonaten sowie aus Polymerisaten und anderen Polycarbonaten.

Die in der Tabelle aufgeführten Mischungen wurden hergestellt, indem die Polycarbonate und die Polymerisate in dem angegebenen Mischungsverhältnis über einen Doppelwellenextruder bei 260 bis 300 °C homogen gemischt wurden. Die dabei erhaltenen Granulate wurden zu Prüfkörpern verspritzt, an denen die in der Tabelle genannten Tests zur Beurteilung der Flammwidrigkeit durchgeführt wurden. Es zeigte sich, daß die Bis-(3,5-dimethyl-4-hydroxyphenyl)-methan enthaltenden Polycarbonate zur deutlichen Anhebung der Flammwidrigkeit der Legierungen gegenüber entsprechenden Legierungen mit sonst vergleichbaren Polycarbonaten führen.

Die eingesetzten Polycarbonate und Polymerisate sind wie folgt charakterisiert :

1) F O = 2,2-Bis-(3,5-dimethyl-4-hydroxyphenyl)-propan-Polycarbonat, $\eta_{rel}$ = 1,295 (5 g/l in $CH_2Cl_2$).

2) F 50 = Copolycarbonat aus Bis-(3,5-dimethyl-4-hydroxyphenyl)-methan und 2,2-Bis-(3,5-dimethyl-4-hydroxyphenyl)-propan, 50/50 Molteile, $\eta_{rel}$ = 1,298, (5 g/l in $CH_2Cl_2$).

3) F 75 = Wie 2, jedoch Molverhältnis 75/25, $\eta_{rel}$ = 1,293 (5 g/l in $CH_2Cl_2$).

4) SAN 10 = Copolymer aus Styrol und Acrylnitril, Gewichtsverhältnis 90/10 ; $\eta_{rel}$ = 1,463 (5 g/l in $CH_2Cl_2$).

5) SAN 13 = Wie 4, jedoch Gew.-Verhältnis 87/13, $\eta_{rel}$ = 1,451 (5 g/l in $CH_2Cl_2$).

6) ABS 25/10 = Pfropfpolymer von Styrol und Acrylnitril im Gew.-Verhältnis 90/10 auf Polybutadienkautschuk, Polybutadienanteil 25 Gew.- % des Pfropfpolymers, Kautschukteilchengröße ca. 0,4 µm.

7) ACR = Pfropfpolymer mit Kern-Mantel-Struktur, Gew.-Verhältnis der Monomeren Butylacrylat/Butandiol-1,3-diacrylat/Diallylmaleat/Methylmethacrylat = 79,2/0,4/0,4/20,0.

Tabelle Beispiele 1-8

Flammwidrigkeit von Mischungen aus Polymerisaten und 2,2-Bis-(3,5-dimethyl-4-hydroxyphenyl)-methan einkondensiert enthaltenden Polycarbonaten sowie aus Polymerisaten und anderen Polycarbonaten zum Vergleich.

| Bsp. | Polycarbonat | Polymerisat | Zusammensetzung Gew.-% | $O_2$-Index % | UL Subjekt 94 3,18 mm | Bemerkungen |
|---|---|---|---|---|---|---|
| 1 | F 50 | SAN 13 | 50/50 | *26,5* | nb | — |
| 2 | F 0 | SAN 13 | 50/50 | 19,0 | nb | Vergleich |
| 3 | F 75 | SAN 10 | 70/30 | *31,0* | *VI* | — |
| 4 | F 0 | SAN 10 | 70/30 | 20,5 | nb | Vergleich |
| 5 | F 75 | ABS 25/10 | 70/30 | *30* | *VI* | — |
| 6 | F 0 | ABS 25/10 | 70/30 | 20 | nb | Vergleich |
| 7 | F 75 | ACR | 90/10 | *34,0* | VO | — |
| 8 | F 0 | ACR | 90/10 | 22,0 | nb | Vergleich |

**Patentansprüche**

1. Verwendung von Abmischungen enthaltend

(a) 40 bis 95 Gew.-% an halogenfreien, schwefelfreien und phosphorfreien thermoplastischen Polycarbonaten mit Mw von 10 000 bis 200 000

(b) 0 bis 60 Gew.-% an halogenfreien Styrolpolymeren, die mindestens 50 Gew.-% Styrol oder halogenfreie Styrolderivate und bis zu 50 Gew.- % halogenfreie Acryl- oder Methacrylverbindungen oder eines ungesättigten Dicarboxylanhydrides einpolymerisiert enthalten, mit mittleren Molekulargewichten $\bar{M}w$ zwischen 10 000 und 600 000 und

(c) 0 bis 60 Gew.-% an halogenfreien Pfropfpolymeren der unter (b) aufgeführten halogenfreien Monomeren auf halogenfreie Butadien-, Acrylcopolyester- oder Polyolefinkautschuke, denen ein Kautschuk-Propfmonomer-Gewichtsverhältnis von 93 % : 7 % bis 5 % : 95 % zugrunde liegt,

wobei die Summe der Komponenten (a) + (b) + (c) in den Abmischungen jeweils 100 Gew.- % beträgt, als Flammschutzmittel zur Herstellung von flammwidrig auszurüstenden Gegenständen aus thermoplastischen Kunststoffen, dadurch gekennzeichnet, daß die halogenfreien, schwefelfreien und phosphorfreien Polycarbonate 25 Mol- % bis 100 Mol- % an bifunktionellen Struktureinheiten der Formel (I)

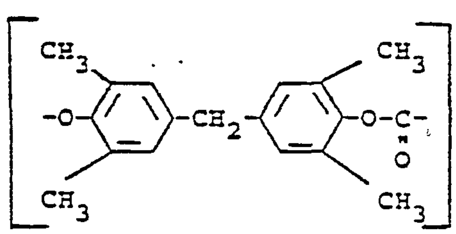

(I)

und 75 Mol- % bis 0 Mol- % an bifunktionellen Struktureinheiten der Formel (III),

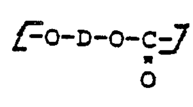

(III)

worin —O—D—O— ein halogenfreier, schwefelfreier und phosphorfreier Diphenolat-Rest mit Ausnahme gemäß Struktur I ist, enthalten.

2. Verwendung gemäß Anspruch 1, dadurch gekennzeichnet, daß die Polycarbonate 25 Mol- % bis 100 Mol- % an bifunktionellen Struktureinheiten der Formel (I) und 75 Mol- % bis 0 Mol- % an bifunktionellen Struktureinheiten der Formel (II) oder (IIa) enthalten.

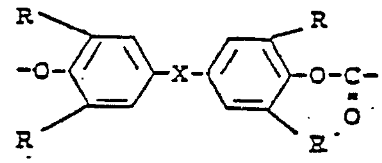

(II)

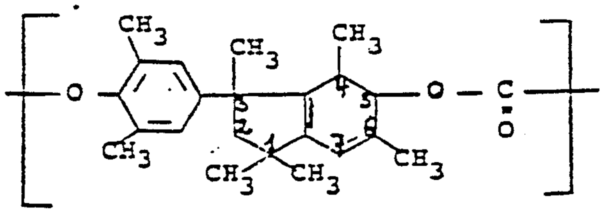

(IIa)

worin R Alkyl oder H und X $C_2$-$C_6$-Alkylen, $C_2$-$C_6$-Alkyliden, Cyclohexylen, Cyclohexyliden, eine Einfachbindung oder einen Rest der Formel

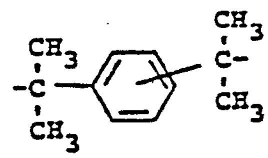

bedeuten.

3. Verwendung gemäß Ansprüche 1 und 2, dadurch gekennzeichnet, daß die Polycarbonate 40 Mol-% bis 100 Mol-% an bifunktionellen Struktureinheiten der Formel (I) enthalten.

4. Verwendung gemäß Ansprüche 1 und 2, dadurch gekennzeichnet, daß die Polycarbonate 70 Mol-% bis 100 Mol-% an bifunktionellen Struktureinheiten der Formel (I) enthalten.

5. Verwendung gemäß Ansprüche 1 und 2, dadurch gekennzeichnet, daß die Polycarbonate 100 Mol-% an bifunktionellen Struktureinheiten der Formel (I) enthalten.

**Claims**

1. Use of mixtures containing

(a) 40 to 95 % by weight of halogen-free, sulphur-free and phosphorus-free thermoplastic polycarbonates with $\bar{M}w$ of 10,000 to 200,000,

(b) 0 to 60 % by weight of halogen-free styrene polymers which contain, polymerised therein, at least 50 % by weight of styrene or halogen-free styrene derivatives and up to 50 % by weight of halogen-free acrylic or methacrylic compounds or of an unsaturated dicarboxyl anhydride, and have average molecular weights $\bar{M}w$ of between 10,000 and 600,000 and

(c) 0 to 60 % by weight of halogen-free graft polymers of the halogen-free monomers included under (b) on halogen-free butadiene, acrylic copolyester or polyolefine rubbers, which are based on a rubber/graft monomer weight ratio of 93 % : 7 % to 5 % : 95 %,

the sum of components (a) + (b) + (c) in the mixtures being in each case 100 % by weight, as flameproofing agents for the production of articles of thermoplastic plastics which are to be provided with a flame-resistant finish, characterised in that the halogen-free, sulphur-free and phosphorus-free polycarbonates contain 25 mole % to 100 mole % of bifunctional structural units of the formula (I)

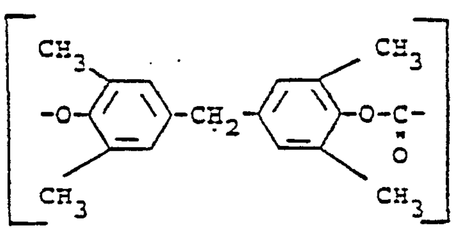

(I)

and 75 mole % to 0 mole % of bifunctional structural units of the formula (III),

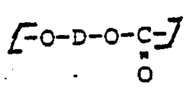

(III)

wherein —O—D—O— is a halogen-free, sulphur-free and phosphorus-free diphenolate radical except according to structure I.

2. Use according to Claim 1, characterised in that the polycarbonates contain 25 mole % to 100 mole % of bifunctional structural units of the formula (I) and 75 mole % to 0 mole % of bifunctional structural units of the formula (II) or (IIa),

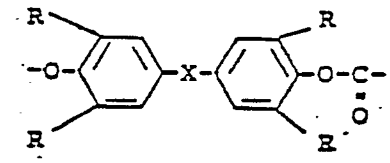

(II)

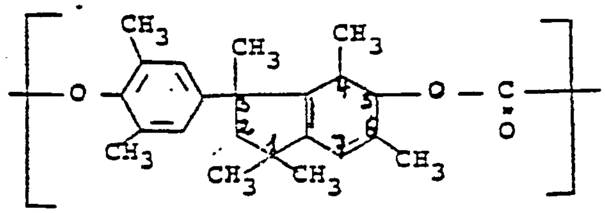

(IIa)

wherein

R denotes alkyl or H and

X denotes $C_2$-$C_6$-alkylene, $C_2$-$C_6$-alkylidene, cyclohexylene, cyclohexylidene, a single bond or a radical of the formula

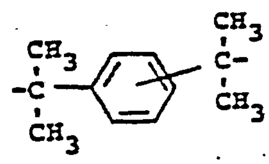

3. Use according to Claims 1 and 2, characterised in that the polycarbonates contain 40 mole % to 100 mole % of bifunctional structural units of the formula (I).

4. Use according to Claims 1 and 2, characterised in that the polycarbonates contain 70 mole % to 100 mole % of bifunctional structural units of the formula (I).

5. Use according to Claims 1 and 2, characterised in that the polycarbonates contain 100 mole % of bifunctional structural units of the formula (I).

**Revendications**

1. Utilisation de mélanges contenant

(a) 40 à 95 % en poids de polycarbonates thermoplastiques ne contenant ni halogène, ni soufre, ni phosphore, avec une valeur Mp de 10 000 à 200 000

(b) 0 à 60 % en poids de polymères de styrène non halogénés qui contiennent, incorporés par polymérisation, au moins 50 % en poids de styrène ou de dérivés non halogénés de styrène et jusqu'à 50 % en poids de composés acryliques ou méthacryliques non halogénés ou d'un anhydride dicarboxylique non saturé, avec des poids moléculaires moyens M̄p compris entre 10 000 et 600 000 et

(c) 0 à 60 % en poids de polymères greffés non halogénés des monomères non halogénés indiqués en (b) sur des caoutchoucs de butadiène, de copolyesters acryliques ou de polyoléfines non halogénés, basés sur un rapport en poids du caoutchouc aux monomères greffés de 93 % : 7 % à 5 % : 95 %

la somme des composants (a) + (b) + (c) dans les mélanges s'élevant à 100 % en poids dans chaque cas, comme retardateurs de flamme pour la fabrication d'objets à ignifuger à partir de matières thermoplastiques, caractérisée en ce que les polycarbonates ne contenant ni halogène, ni soufre, ni phosphore renferment 25 à 100 moles % de motifs structuraux bifonctionnels de formule (I)

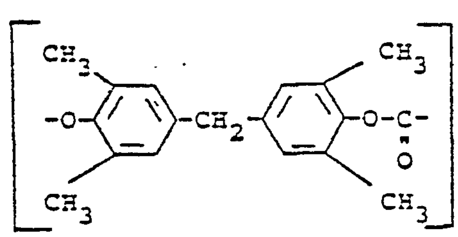

(I)

et 75 moles % à 0 mole % de motifs structuraux bifonctionnels de formule (III)

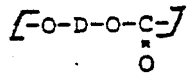

(III)

où —O—D—O— représente un reste diphénolate ne contenant ni halogène, ni soufre, ni phosphore, exception faite de la structure I.

2. Utilisation suivant la revendication 1, caractérisée en ce que les polycarbonates contiennent 25 à 100 moles % de motifs structuraux bifonctionnels de formule (I) et 75 à 0 moles % de motifs structuraux bifonctionnels de formule (II) ou (IIa)

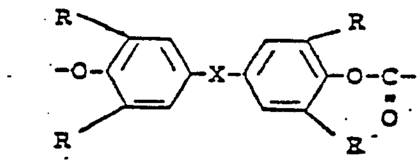

(II)

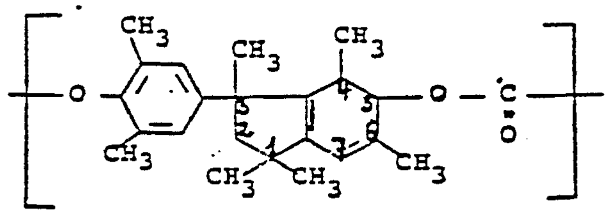

(IIa)

où R est un groupe alkyle ou H et X est un groupe alkylène en $C_2$ à $C_6$, alkylidène en $C_2$ à $C_6$, cyclohexylène, cyclohexylidène, une liaison simple ou un reste de formule

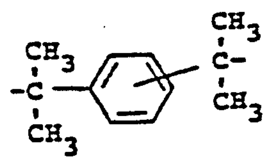

3. Utilisation suivant les revendications 1 et 2, caractérisée en ce que les polycarbonates contiennent 40 à 100 moles % de motifs structuraux bifonctionnels de formule (I).

4. Utilisation suivant les revendications 1 et 2, caractérisée en ce que les polycarbonates contiennent 70 à 100 moles % de motifs structuraux bifonctionnels de formule (I).

5. Utilisation suivant les revendications 1 et 2, caractérisée en ce que les polycarbonates contiennent 100 moles % de motifs structuraux bifonctionnels de formule (I).